# EUROPEAN PATENT APPLICATION

(11) **EP 1 008 931 A2**
(43) Date of publication of application: **14.06.2000**
(21) Application number: 99309540.5
(22) Date of filing: 29.11.1999
(51) Int. Cl.: G06F 9/44

(54) **TV PIP applet implementation using a PIP framework**

(30) Priority: 30.11.1998 US 201685
(71) Applicant: SUN MICROSYSTEMS, INC., Palo Alto, California 94043 (US)
(72) Inventor: Kanungo, Rajesh, Sunnyvale, California 94087 (US)
(74) Representative: Browne, Robin Forsythe, Dr.

(57) **Abstract**

A method and apparatus in which the appearance and functionality of a virtual remote control panel on a web page is controlled by an applet downloaded in connection with the web page. Because the appearance and functionality of the virtual control panel is controlled by the applet, it is easy to change. The invention also includes a set of methods or functions (an API) that can be used by the applet to interface to the video source. This API uses a PIP abstract Java class and a PIPInfo abstract Java class, where "PIP" stands for "picture in picture."

## Description

### FIELD OF THE INVENTION

This application relates to a method and apparatus for a user interface control and, specifically, to a method and apparatus that allows a user to control and display video data via a web page interface.

### BACKGROUND OF THE INVENTION

Television sets and VCR players are traditionally controlled by a physical device, such as a handheld remote unit or directly by physical controls mounted on the set or player itself. It is often difficult for a designer of a physical remote unit to correctly anticipate and design the best possible user interface for his unit. Furthermore, the "best" user interface for a remote may vary between various users and may vary, depending on the type of activities that a particular user desires to perform. Unfortunately, physical control units lack a flexibility of user interface design.

In addition, physical remote units tend to get misplaced or lost. See, for example, U.S. Patent No. 5,294,915 to Owen, issued June 30, 1993, relating to locating a lost physical remote control unit. It would be desirable never to have to worry about lost physical remotes.

This problem is compounded in certain types of consumer electronics devices that do not contain provisions for reprogramming the video unit, so that it is not possible to easily change the programming of the video unit. What is needed is a flexible type of user interface that allows the designer to change the functionality and the look and feel of a remote control.

### SUMMARY OF THE INVENTION

A described embodiment of the present invention allows the user to control the display of video data (sent from a television set or other video source) via a "virtual remote control" displayed on a World Wide web page being viewed by the user. A described embodiment of the present invention is implemented in a set top box environment, although the present invention could also be implemented in a browser capable of running Java applets and executing on any appropriate computer or data processing system.

In the described embodiment, the user downloads and views a web page containing a Java applet. When executed, the Java applet displays a "virtual remote control" panel. Because the look and feel of the virtual remote control panel is entirely defined in the downloaded applet, it is easy to change the configuration and appearance of the virtual remote control panel. No programming changes are required in the set top box (or the video source) to implement changes in the user interface of the remote.

The described embodiment of the present invention includes a PIP (Picture in Picture) API (Application Programming Interface). This API contains a number of predefined Java methods that can be called by the downloaded applet to control the display of the video data. Thus, the functionality of the virtual remote can also be easily changed, since the virtual remote is implemented by the applet making calls to the PIP API. Thus, the applet can display and operate a virtual remote control having any functionality consistent with the functionality allowed by the PIP API. The term PIP refers to the fact that the video data is displayed as a "picture within a picture" on the web page. It does not necessarily refer to the concept of displaying one video picture inside another video picture, although such a conventional video picture within a video picture could also be implemented in accordance with the invention.

In accordance with the purpose of the invention, as embodied and broadly described herein, the invention relates to a method of controlling display of video data, comprising: executing an applet specified within a downloaded web page; receiving, by the applet, user input via a virtual control panel displayed by the applet on the web page; and controlling display of video data on the web page, by the applet, in accordance with the user input.

A fuller understanding of the invention will become apparent and appreciated by referring to the following description and claims taken in conjunction with the accompanying drawings.

### BRIEF DESCRIPTION OF THE DRAWINGS

The accompanying drawings, which are incorporated in and constitute a part of this specification, illustrate several embodiments of the invention and, together with the description, serve to explain the principles of the invention.

Fig. 1(a) is a block diagram of a data processing system in accordance with one embodiment of the present invention.

Fig. 1 (b) is a block diagram of a data processing system in accordance with one embodiment of the present invention.

Fig. 2 shows an example of a set top box system, including a remote unit, and a video display.

Fig. 3(a) shows an example of a display device, including a video area and a virtual remote control panel.

Fig. 3(b) shows an example of a display device, including a small video area, additional content, and a virtual remote control.

Fig. 3(c) shows an example of a display device, including two video areas and a virtual remote control panel.

Fig. 3(d) shows an example of a display device, including two video areas, one inside the other, and a virtual remote control panel.

Figs 4(a)-4(d) show examples of pull-down menus for select buttons on the virtual remote control of Fig. 3.

Fig. 5(a) shows an example of Java classes used in the described embodiment of the present invention.

Fig 5(b) shows a block diagram of the described embodiment of the present invention, including an applet, instances of the classes of Fig. 5(a), and native code controlling a display device.

Fig. 6 is a flow chart of a method performed by the applet of Fig. 5(b).

Figs 7(a)-7(e) are exemplary flow charts showing actions taken by the applet in response to various user actions in the described embodiment of the present invention.

Figs. 8(a)-8(c) are examples of, respectively, objects of a PIP class, a Tunerlnfo class, and a Videolnfo class.

Figs. 9(a)-9(h) are flow charts of exemplary methods in the Tunerlnfo class and the Videolnfo class.

Figs. 10(a)-10(f) are flow charts of exemplary of methods in the PIP class that are called by the virtual remote control applet.

Fig. 11 is an exemplary list of native code functions called by the objects of Fig. 8.

Fig. 12 is an example of HTML for a Web page that contains an example of the virtual remote control applet.

### DETAILED DESCRIPTION OF EMBODIMENTS

### I. General Discussion

Many conventional World Wide Web browsers include a Java virtual machine and are capable of executing Java applets. A Java applet is a computer program written in the Java programming language that is designed to execute "within" a World Wide Web browser. Such applets are often started when a user clicking on a button or link in a displayed Web page. Once started, an applet executes inside the browser, performing whatever tasks it has been programmed to perform. "Java" is a trademark of Sun Microsystems, Inc. in the United States and other countries.

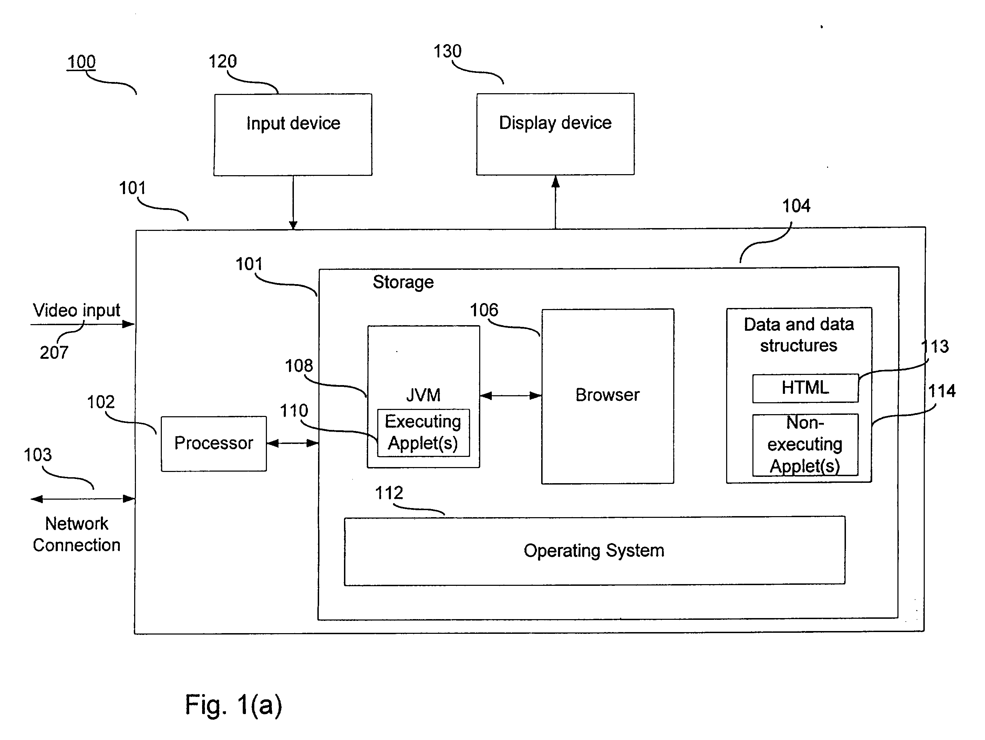

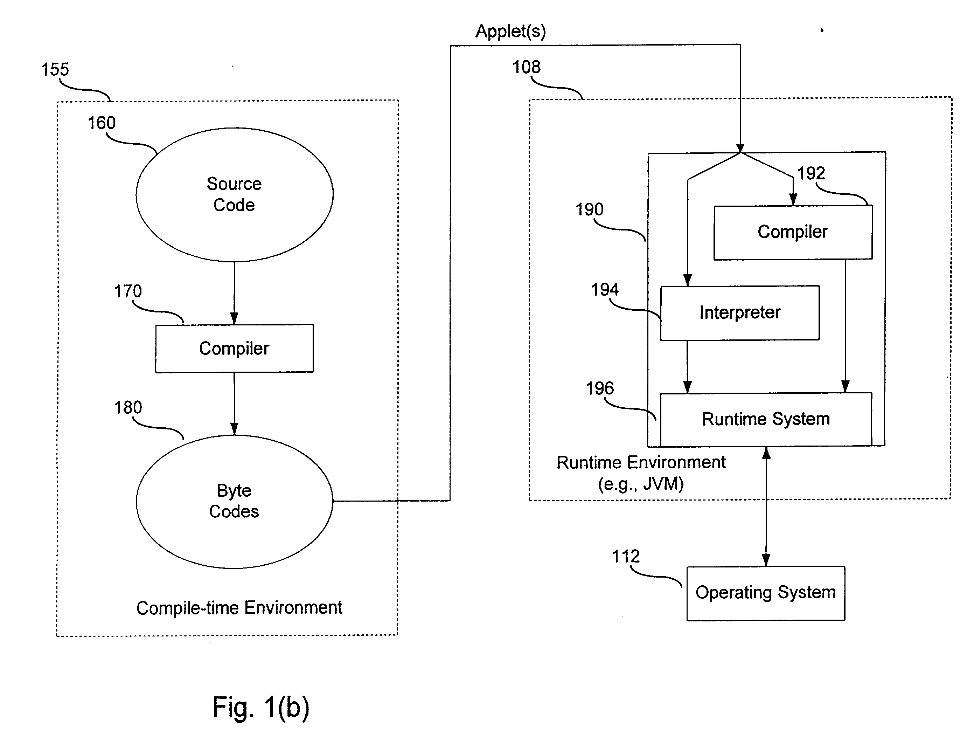

Fig. 1(a) is a block diagram of a data processing system 100 in accordance with one embodiment of the present invention. Data processing system 100 can be, for example, a set top box 101 connected to a display device 130, such as, for example, a television set or some other appropriate display device. Data processing system 100 can also be, for example, any data processing system that does not allow the user to have access or control of its operating system or that does not allow the user to warm boot the system at certain times.

System 100 includes a processor 102 and a data storage area (e.g., a memory) 104. Data storage area 104 includes certain well-known types of information, such as operating systems 112 and data and data structures 114. In the embodiment shown, data and data structures 114 include, for example, web pages capable of being displayed by a browser 106. Data and data structures 114 can also include, for example, applet software capable of being executed by a Java virtual machine (JVM) 108. Storage area 104 preferably also includes software (not shown) for communicating with a network connection 103, which can be a LAN, WAN, intranet, or the internet.

A person of ordinary skill in the art will understand that system 100 may also contain additional elements, such as input/output lines; additional or second input devices, such as a keyboard, a mouse, and a voice input device; and display devices, such as a display terminal. System 100 may also include a computer readable input device (not shown), such as a floppy disk drive, CD ROM reader, a chip connector, a chip connector, or a DVD reader, that reads computer instructions stored on a computer readable medium, such as a floppy disk, a CD ROM, a memory chip, or a DVD disk. System 100 also may include application programs, operating systems, data, etc., which are not shown in the figure for the sake of clarity.

In the following discussion, it will be understood that the steps of methods and flow charts herein discussed herein can be performed by processor 102 (or another appropriate processor) executing instructions stored in storage area 104 (or other appropriate memories or storage areas). It will also be understood that the invention is not limited to any particular implementation or programming technique and that the invention may be implemented using any appropriate techniques for implementing the functionality described herein. The invention is not limited to any particular programming language or operating system.

The instructions in storage area 104 may be read into storage area 104 from a computer-readable medium (not shown). Execution of sequences of instructions contained in main memory causes processor 102 (or a similar processor) to perform the processes described herein. In alternative embodiments, hard-wired circuitry may be used in place of or in combination with software instructions to implement the invention. Thus, embodiments of the invention are not limited to any specific combination of hardware circuitry and software.

Fig. 1(a) shows a virtual machine (such as a Java virtual machine) 108 executing on system 100. Fig. 1(b) is a block diagram of a virtual machine that is supported by system 100 of Fig. 1(a), and is suitable for implementing the present invention. When a computer program, e.g., a computer program written in the Java programming language, is executed, source code 160 is provided to a compiler 170 within compiletime environment 155. Compiler 170 translates source code 160 into bytecodes 180. In general, source code 160 is translated into bytecodes 180 at the time source code 160 is created by a software developer.

Bytecodes 180 may generally be reproduced, downloaded, or otherwise distributed through a network, e.g., network 103 of Fig. 1(a), or stored on a storage device such as primary storage 104 of Fig. 1(a). In the described embodiment, bytecodes 180 are platform independent. That is, bytecodes 180 may be executed on substantially any computer system that is running on a suitable virtual machine.

Bytecodes 180 are provided to a runtime environment 108, which includes virtual machine 190. Runtime environment 108 may generally be executed using a processor or processors such as processor 102 of Fig. 1(a). Virtual machine 109 includes a compiler 192, an interpreter 194, and a runtime system 196. Bytecodes 180 may be provided either to compiler 192 or to interpreter 194.

When bytecodes 180 are provided to compiler 192, methods contained in bytecodes 180 are compiled into machine instructions. In one embodiment, compiler 192 is a just-in-time compiler, which delays the compilation of methods contained in bytecodes 180 until the methods are about to be executed. When bytecodes 180 are provided to interpreter 194, bytecodes 180 are read into interpreter 194 one bytecode at a time. Interpreter 194 then performs the operation defined by each bytecode as each bytecode is read into interpreter 194. That is, interpreter 194 "interprets" bytecodes 180, as will be appreciated by those skilled in the art.

When a method is invoked by another method, or is invoked from runtime environment 108, if the method is interpreted, runtime system 196 may obtain the method from runtime environment 108 in the form of sequences of bytecodes 180, which may be directly executed by interpreter 194. If, on the other hand, the method that is invoked is a compiled method that has not been compiled, runtime system 108 also obtains the method from runtime environment 108 in the form of a sequence of bytecodes 108, which then may go to activate compiler 192. Compiler 194 then generates machine instructions from bytecodes 180, and the resulting machine-language instructions may be executed directly by processor 102 (or other appropriate processors). In general, the machine-language instructions are discarded when virtual machine 109 terminates. The operation of virtual machines or, more particularly, Java virtual machines, is described in more detail in The Java Virtual Machine Specification by Time Lindholm and Frank Yellin (ISBN 0-201-63452-X), which is incorporated herein by reference.

### II. Detailed Discussion

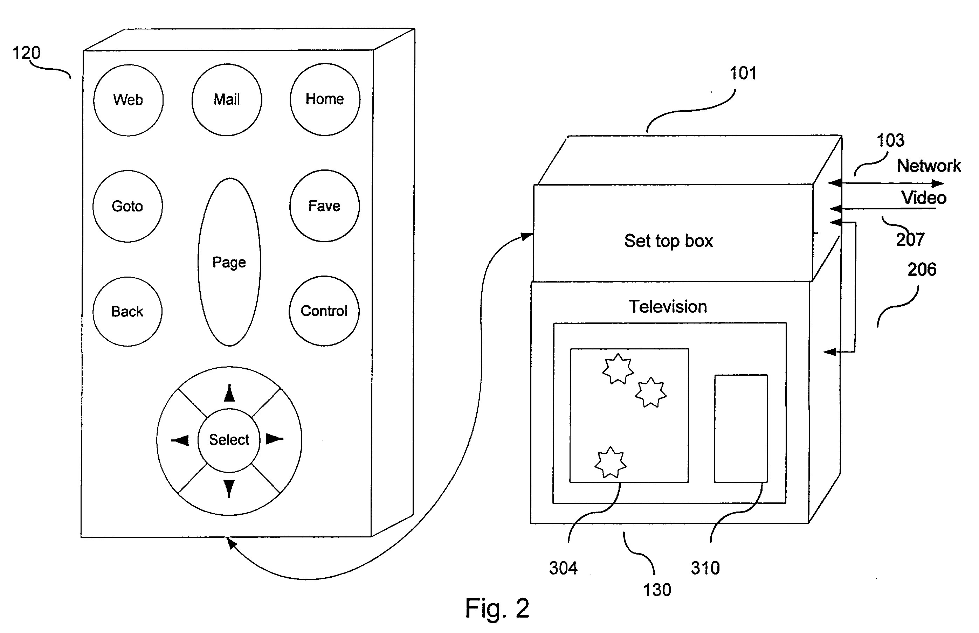

Fig. 2 shows an example of a set top box system, including a set top box 101 connected to a television 130 and a remote unit 120. Remote unit 120, which is used as an input device, is not shown to scale. An actual remote unit is generally of a size appropriate to fit in a user's hand. Similarly, set top box 101 and television 120 are not necessarily shown to scale. It will be understood that

It will be understood that the button arrangement shown on remote unit 120 are for purposes of example only and are not to be interpreted in a limiting sense. Remote unit 120 includes a "web" button, a "mail button, a "home" button, a "goto" button, a "fave" button, a "back" button, a "ctl" button, arrow buttons, and a "select" button. As will be appreciated, a conventional use of back button is to display a previously displayed web page. Similarly, a conventional use of "goto" button is to allow the user to specify and view a new web page. The arrow buttons allow the user to move a cursor between various elements on web page 304.

In Fig. 2, a video area 304 and a virtual remote control panel 310 are displayed on a web page displayed on display device 130. It will be understood that both of elements 304 and 310 are generated on a web page under control of an applet (not shown), such as applet 110 of Fig. 1(a).

Network connection 103 allows the set top box to communicate with a network, such as the internet, an intranet, a LAN or a WAN. Network connection 103 can also be a wireless link. Certain embodiments of the present invention can also be used with a keyboard or with an infrared or other wireless keyboard (not shown).

Video line 207 provides a source of video input to set top box 101. Line 206 couples the set top box 101 to the display device 130 to convey video and audio output signals to the display device 130. The signals on line 206 could be, for example, one or more of, S-video signals, composite signals, component signals, or audio signals, HDTV signals.

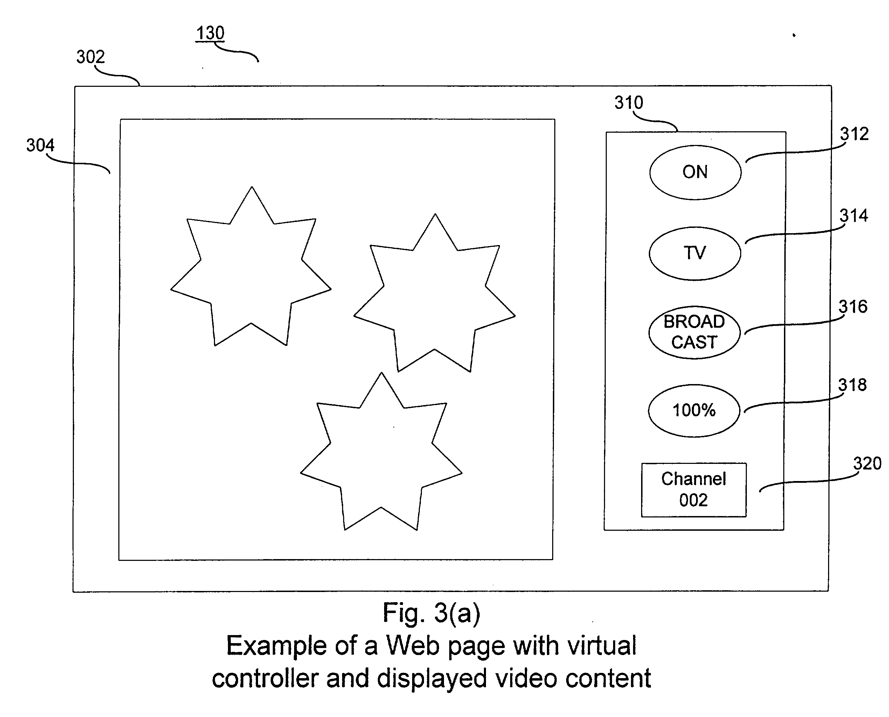

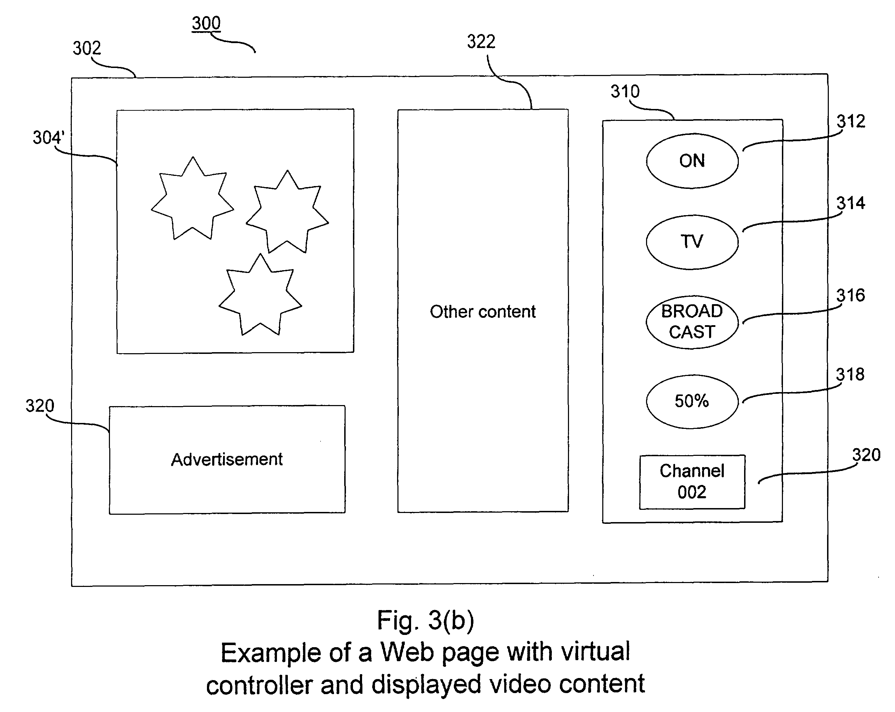

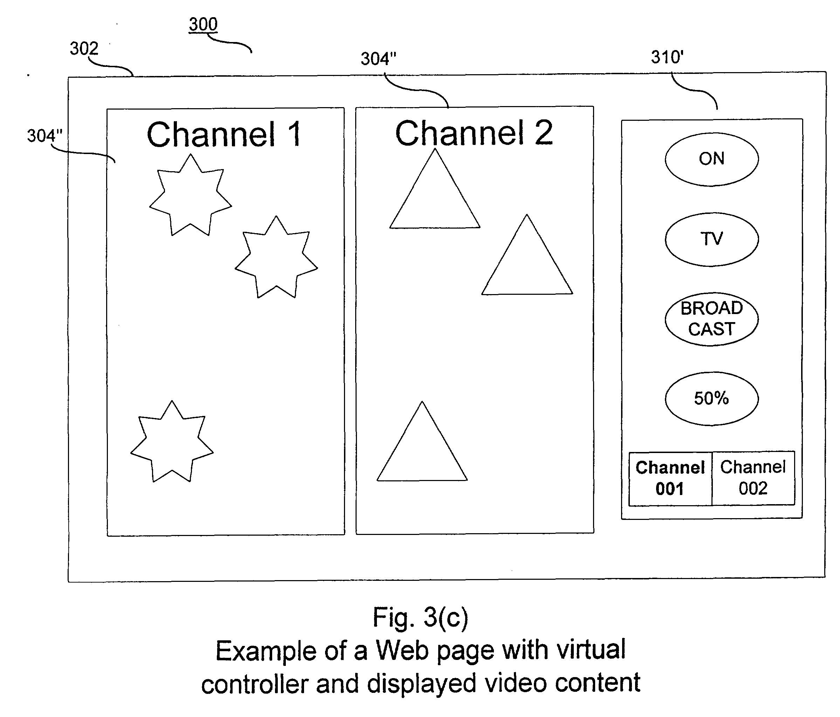

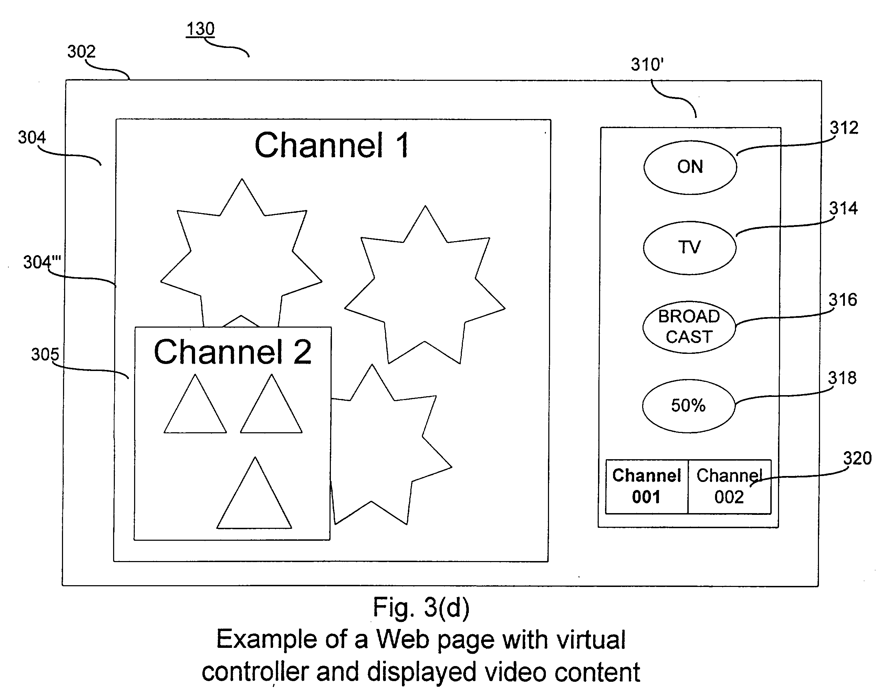

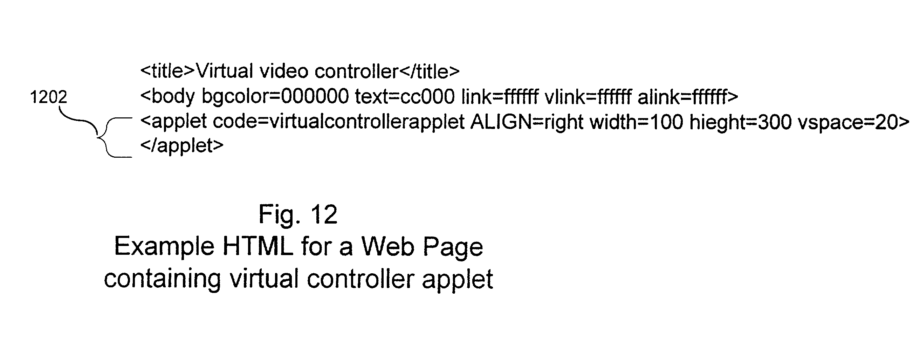

Fig. 3(a) shows an example of a display device 130 on which a web page 302 is displayed. Web page 302 is displayed in accordance with HTML or a similar descriptive language or convention (see example of Fig. 12). Web page 302 includes a video area 304 and a virtual remote control panel 310. In the described embodiment, certain elements of the web page, such as area 304 and virtual control panel 310 are implemented as widgets generated by the applet, but they could also be implemented as a part of the page described by HTML. In the example, video data is being displayed in video area 304 and user interface elements are being displayed in virtual control panel 310.

The user interface elements in this exemplary virtual control panel include an ON/OFF selector button 312 (here, ON is selected); a TV/Video selector button 314 (here, TV is selected); a Broadcast/cable selector button 316 (here, broadcast is selected), a size button (here, 100% is selected), and a channel indicator 320 (here, the set is tuned to channel 002). It will be understood that the user interface elements shown herein an provided for purpose of example only and are not to be interpreted in a limiting sense. Any appropriate control elements, including but not limited to those shown herein, can be used in connection with the present invention.

Fig. 3(b) shows an example of a display device, including a small video area 304', additional content (for example, an advertisement 320 and other text 322) and a virtual remote control panel 310. As shown, the user has set the video display to be a size of 50%. In the embodiment of Fig. 3(b), the applet displays other content in the remaining space on the page. In yet another embodiment, the applet may always choose to display the video in a certain size area 304 and always display advertisements or other appropriate content.

Fig. 3(c) shows an example of a display device, including two video areas 304" and a virtual remote control 310'. In the example, the virtual control panel includes two channel indicators, one for each video area 304".

Fig. 3(d) shows an example of a display device, including two video areas, where video area 305 is inside video area 304"', and a virtual remote control panel. In the example, the virtual control panel includes two channel indicators, one for each video area 304"' and 305.

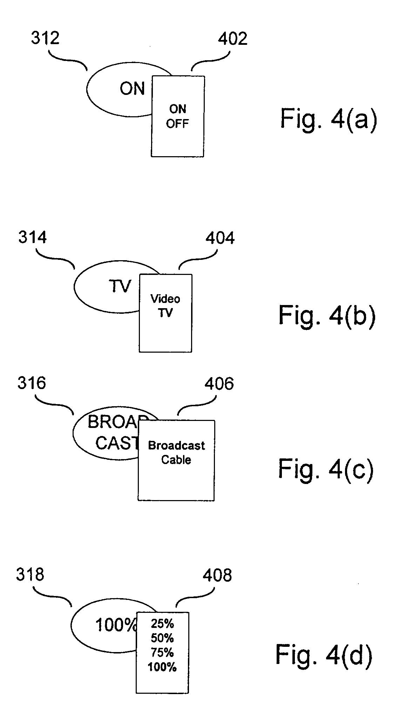

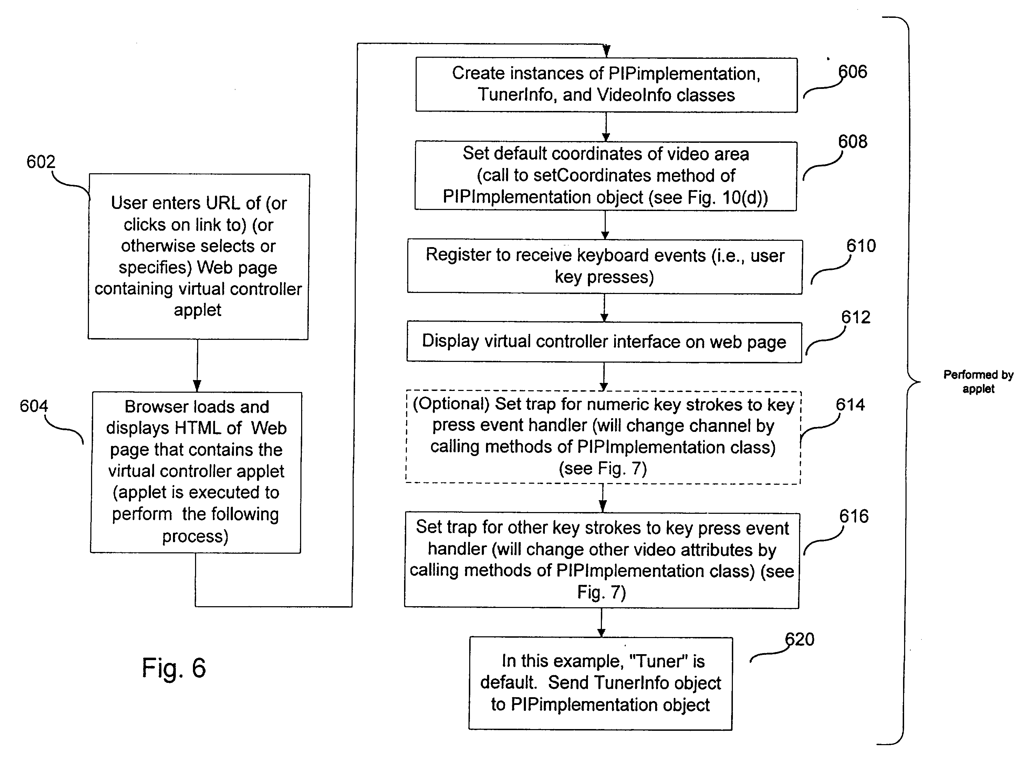

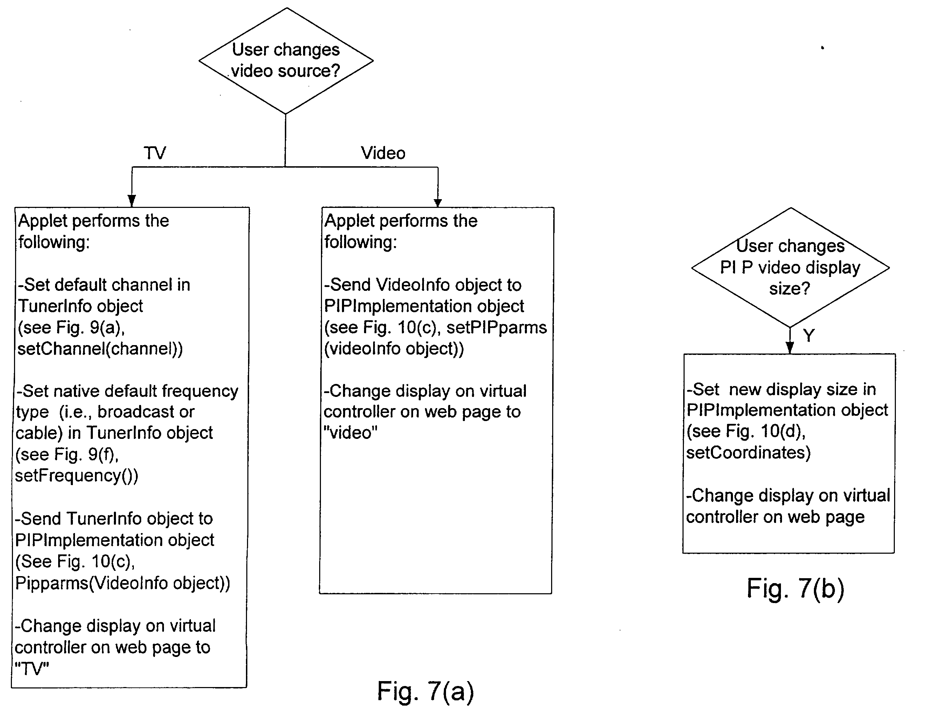

Figs 4(a)-4(d) show examples of pull-down menus for select buttons on the virtual remote control of Fig. 3. As shown, the user selects a button to view a list of possible choices and then selects one of the choices. Fig. 7 discusses actions performed by the applet in response to user input. It should be understood that other known types of user interfaces can be used to implement that video functions shown herein (or similar video functions).

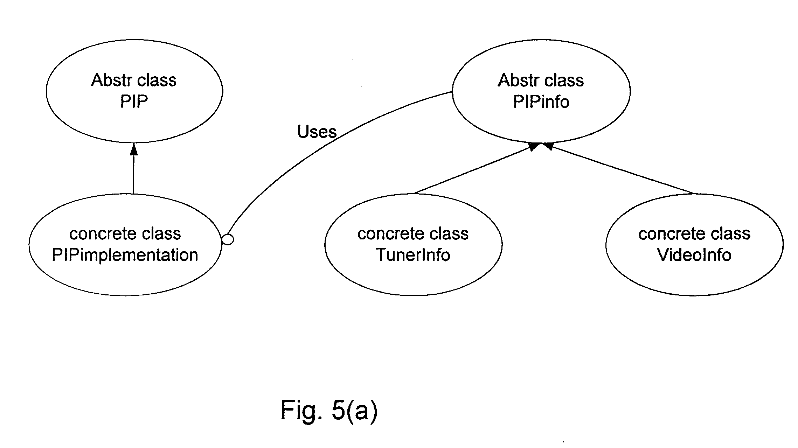

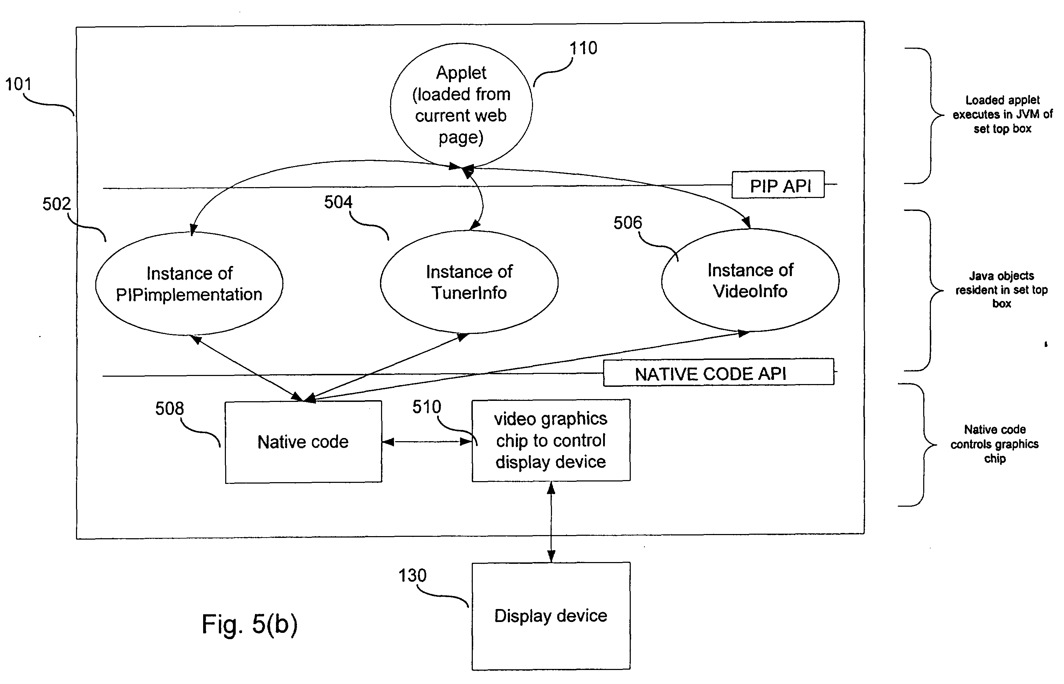

Fig. 5(a) shows an example of Java classes used in the described embodiment of the present invention. It should be understood that the classes presented herein are presented by way of example and are not to be taken in a limiting sense. The invention can also be implemented using similar object oriented programming languages and is not necessarily limited to Java. The exemplary classes include two abstract Java classes: an abstract PIP class and an abstract PIPlnfo class. A PlPlmplementation class is a sub class of the abstract PIP class. A Tunerlnfo class and a Videolnfo class are sub classes of the PIPlnfo class. As will be described below, instances of the PlPlmplementation class use instances of the PlPinfo class (I.e., Tunerlnfo and Videolnfo objects).

Fig 5(b) shows a block diagram of the described embodiment of the present invention, including an applet 110, instances 502, 504, 506 of the classes of Fig. 5(a), and native code 508 controlling a display device 130 via a video chip 510 In the described embodiment, the video chip is an IGS Cyberpro 5000 chip manufactured by IGS Technologies, Inc.. Video chip 130 is connected to and controls a display device 130. Native code 508 is written in, for example, the C ++ programming language in a manner appropriate to control the video chip. The exact nature and specifications of native code 508 will depend on the specific video chip employed.

Fig. 6 is a flow chart of a method performed by the applet of Fig. 5(b). Steps 602 and 603 are actually steps performed by a browser to download a web page containing the applet and begin execution of the applet. In step 606, the applet creates an instance of each of the PlPlmplementation class, the Tunerlnfo class, and the Videolnfo class. When each instance is created, it will initialize itself with predetermined default values. In step 610, the applet registers to receive key presses from an operating system. In step 612, the applet displays virtual control panel 310. If the set top box is receiving keyboard input (for example, from an infrared keyboard, or other appropriate keyboard), in step 314, the applet sets a trap for numeric key strokes in a key stroke event handler (which indicate a channel change). In step 616 the applet sets a trap for other key presses in the key stroke handler, which are used to change other video attributes of the controller. Step 616 is performed, for example, in embodiments having a keyboard with numeric keys. The embodiment shown in Fig. 2 uses the arrow keys on the remote to choose between numeric channel values displayed by the applet on the virtual remote panel.

If the applet wants to start in TV mode in step 620, it sends the Tunerlnfo object to the PlPlmplementation object in step 620. Otherwise (not shown), it sends the instance Videolnfo to the PlPlmplementation object.

Figs 7(a)-7(e) are exemplary flow charts showing actions taken by the applet in response to various user actions in the described embodiment of the present invention. Fig. 7(a) shows steps when the user changes the video source from TV to Video (e.g., from TV to a VCR). Fig. 7(b) shows steps when the user changes the display size. Fig. 7(c) shows steps when the user switches the video display within the web page ON or OFF. Fig. 7(d) shows steps when the user changes the frequency type (e.g., broadcast or cable). Fig. 7(e) shows steps when the user changes the channel. It will be understood that the methods of Fig. 7 are exemplary only and are not to be interpreted in a limiting sense.

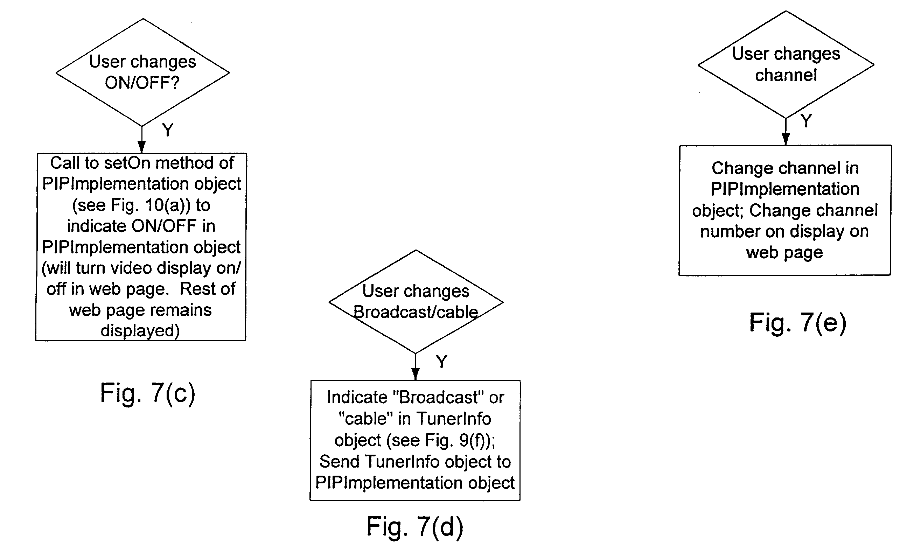

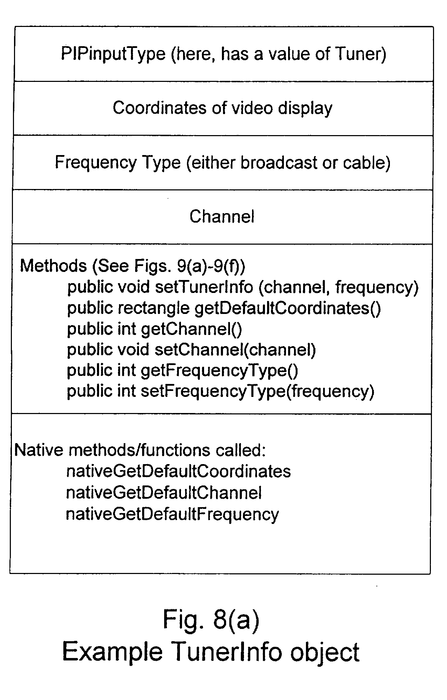

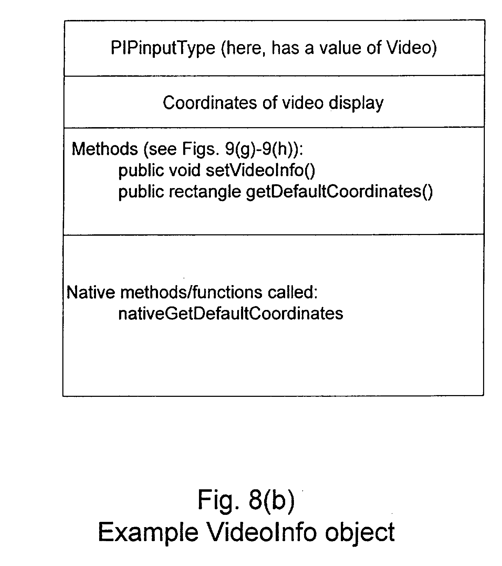

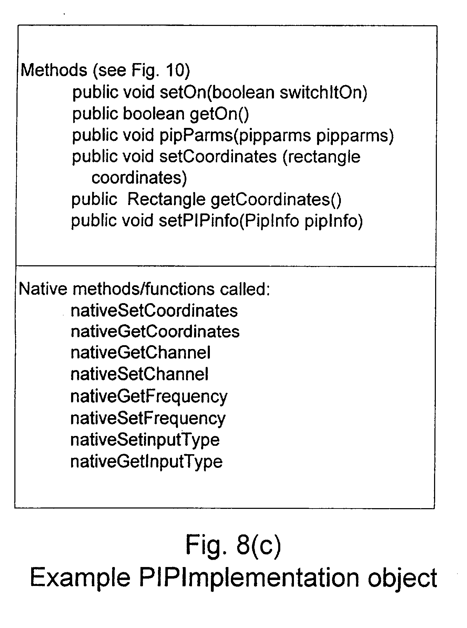

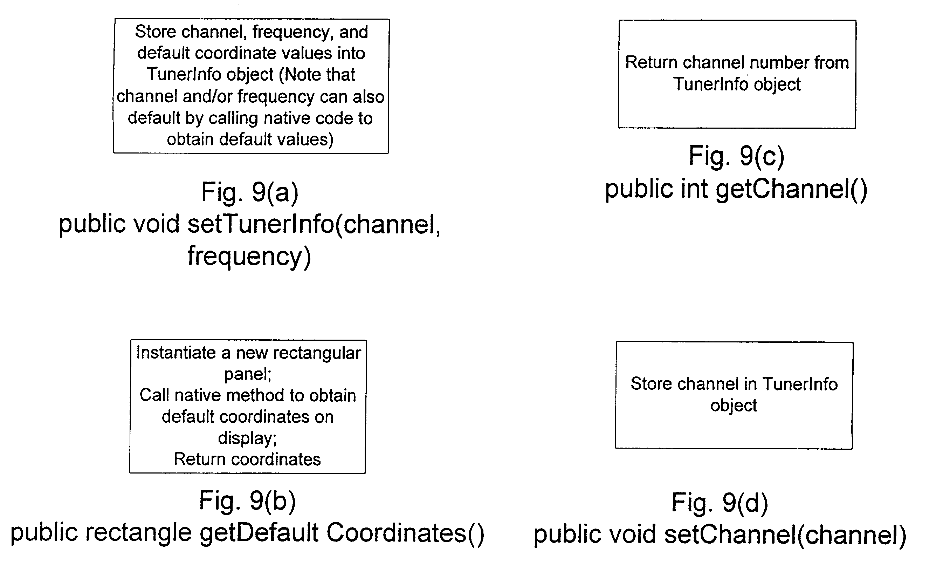

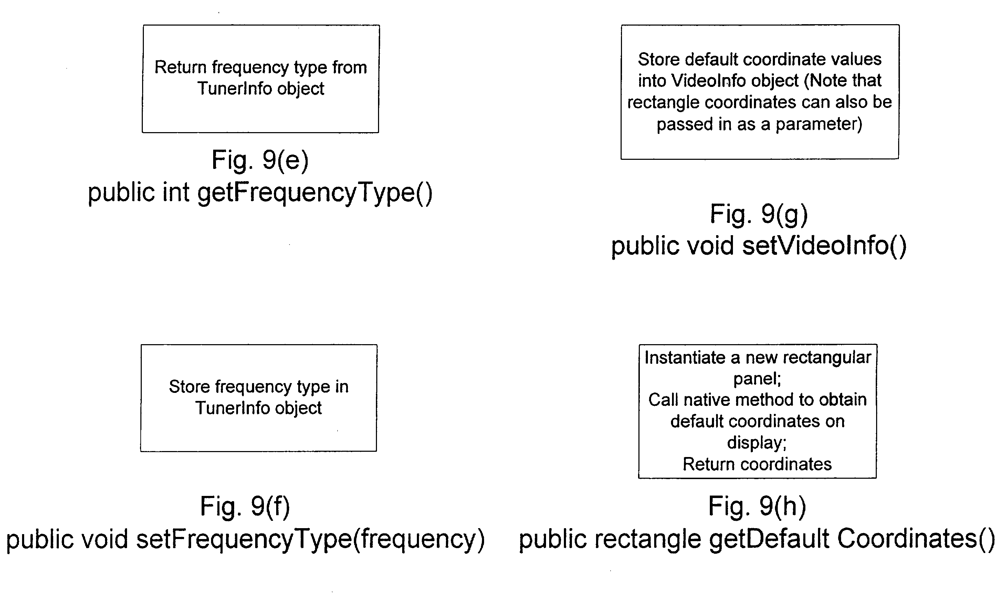

Figs. 8(a)-8(c) are examples of, respectively, objects of a PlPlmplementation class, a Tunerlnfo class, and a Videolnfo class. As shown in Fig. 8(a), a Tunerlnfo object contains data identifying a current PIP type (i.e., "Tuner"), coordinates of the video area 304, a current frequency (broadcast or cable), and a current channel. A Tunerlnfo object also contains methods as shown to receive parameters, to allow an applet to get default coordinates of area 304, to get and set the channel, and to get and set the frequency. Details of these methods are shown in Figs. 9(a)-9(f).

As shown in Fig. 8(b), a Videolnfo object contains data identifying a current PIP type ("Video") and coordinates of the video area 304. A Videolnfo object also contains methods as shown to receive parameters and to allow an applet to get default coordinates of area 304. Details of these methods are shown in Figs. 9(g)-9(h).

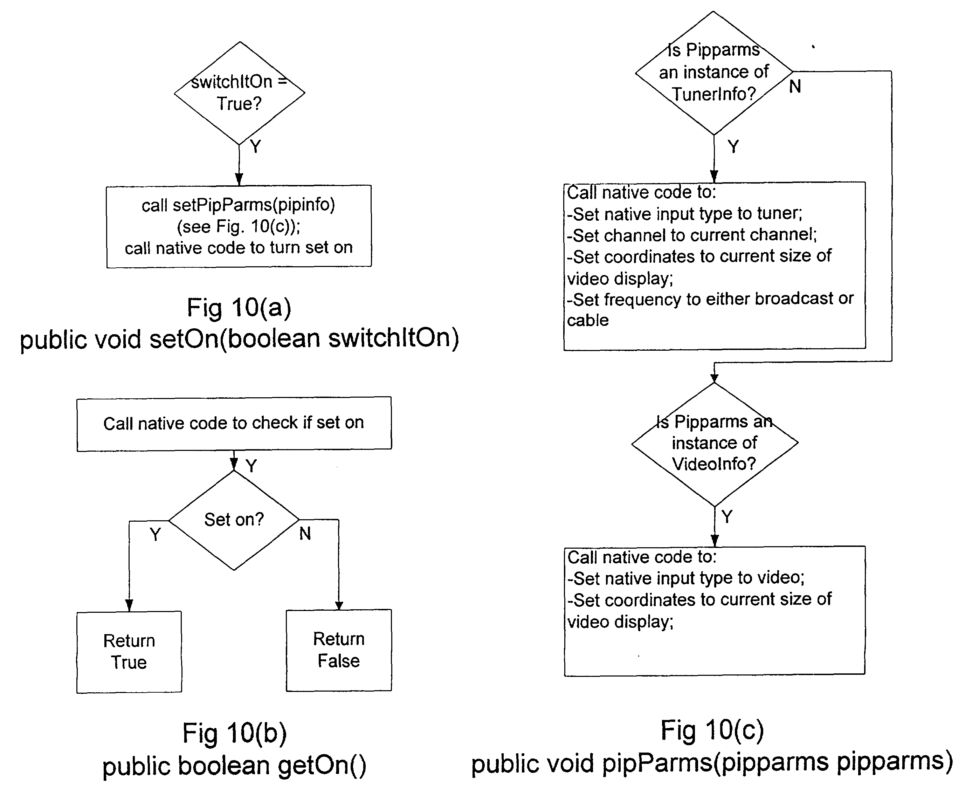

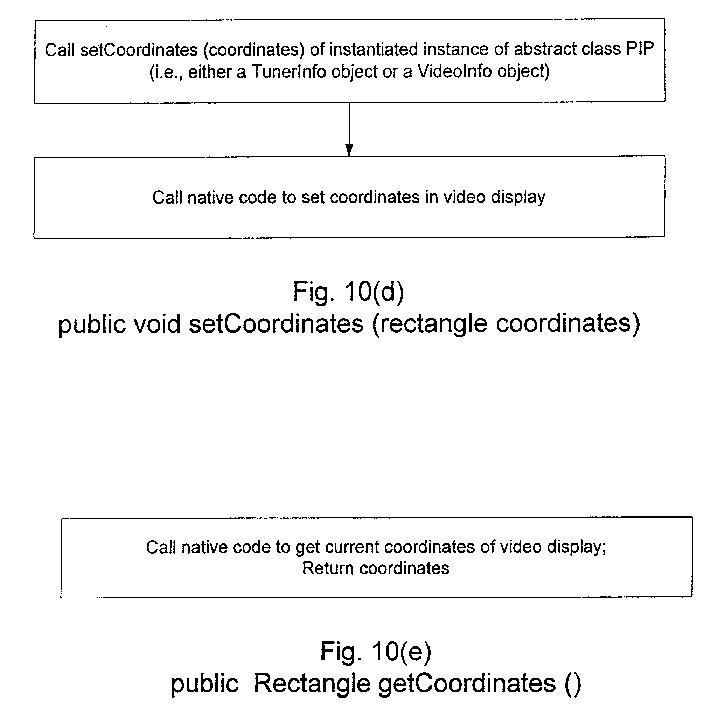

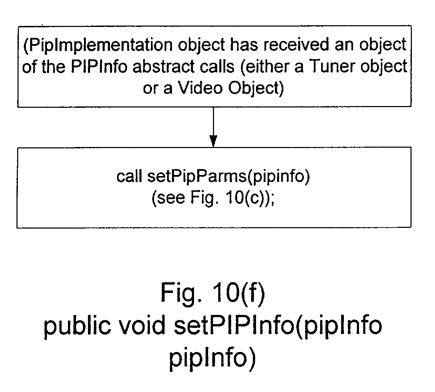

As shown in Fig. 8(c), a PlPlmplementation object contains methods as shown in Fig. 10(a)-10(f) and calls several native code routines to communicate with and control the video chip. PlPlmplementation objects receive PIPlnfo objects as input.

Figs. 9(a)-9(h) are flow charts of exemplary methods in the Tunerlnfo class and the Videolnfo class. These methods include, without limitation:
- public void setTunerlnfo (channel, frequency), which sets information into a Tunerlnfo object;
- public rectangle getDefaultCoordinates(), which gets the default coordinates of a Tunerlnfo object;
- public int getChannel(), which gets a current channel of a Tunerlnfo object;
- public void setChannel(channel) (), which sets a channel in a Tunerlnfo object;
- public int getFrequencyType(), which gets a current frequency type (e.g., broadcast or cable) of a Tunerlnfo object;
- public int setFrequencyType(frequency), which sets a frequency type of a Tunerlnfo object;
- public void setVideolnfo(), which sets video information in a Videoinfo object;
- public rectangle getDefaultCoordinates(); which obtains the default coordinates of a Videolnfo object

Figs. 10(a)-10(f) are examples of methods in the PlPlmplementation class that are called by the virtual remote control applet. Each of the flowcharts of Figs. 9 and 10 shows steps performed by a method in the "virtual remote" API of the described embodiment. It should be understood that this API is only one example of an API that could operate with the present invention and that the described API is not to be taken in a limiting sense.

The methods of the PlPlmplementation object include, without limitation:
- public void setOn(boolean switchltOn), which tuns the video display within the web page on or off;
- public boolean getOn(), which returns an indicator of whether the video display within the web page is on;
- public void pipParms(pipparms pipparms), which sets up parameters in the PIPlnfo objects;
- public void setCoordinates (rectangle coordinates), which sets coordinates on the video display within the web page;
- public Rectangle getCoordinates(), which returns the coordinates of the video display within the web page;
- public void setPIPlnfo(Piplnfo piplnfo), sends a PIPlnfo class object to a PIP object.

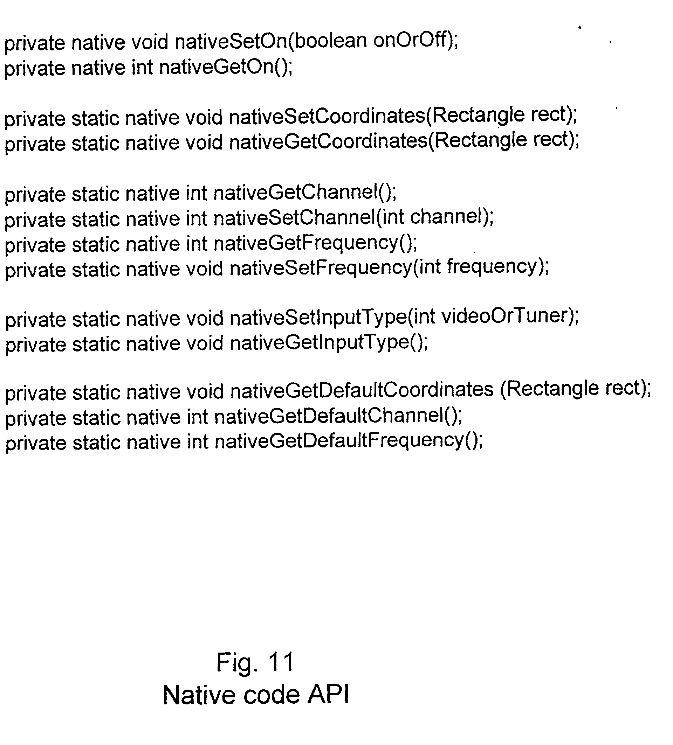

Fig. 11 is an exemplary list of native code functions called by the objects of Fig. 8. These functions make up a "native code API." The native code API will vary somewhat, depending on the capabilities of the video chip used and the capabilities required by the virtual remote control API.

Fig. 12 is an example of HTML for a Web page that contains an example of the virtual remote control applet. This example is not to be taken as a limitation of the present invention.

In summary, the described embodiment of the present invention provides a way for video data to be displayed on a web page under control of an applet. Because the applet defines the appearance and functionality of a virtual remote control displayed on the web page, the appearance and functionality of the virtual remote control can be easily changed without having to modify the hardware of software that is built in to the platform on which the applet is executed. The appearance and functionality of the virtual remote control are automatically updated each time a new version of the applet is loaded, An exemplary API for a set top box is described. The applet calls API functions in response to user input via the virtual remote control displayed on the web page.

While the invention has been described in conjunction with a specific embodiment, it is evident that many alternatives, modifications and variations will be apparent to those skilled in the art in light of the foregoing description. Accordingly, it is intended to embrace all such alternatives, modifications and variations as fall within the spirit and scope of the appended claims and equivalents.

## Claims

1. A method of controlling display of video data, comprising:
executing an applet specified within a downloaded web page;
receiving, by the applet, user input via a virtual control panel displayed by the applet on the web page; and
controlling display of video data on the web page, by the applet, in accordance with the user input.

2. The method of claim 1, wherein the virtual control panel resembles a television remote control.

3. The method of claim 1, wherein the virtual control panel allows the user to change channels.

4. The method of claim 1, wherein the virtual control panel allows the user to change from TV to video input.

5. The method of claim 1, wherein the virtual control panel allows the user to change from broadcast to cable input.

6. The method of claim 1, wherein the virtual control panel allows the user to turn the display on or off.

7. The method of claim 1, wherein the virtual control panel allows the user to change the size of the video display.

8. The method of claim 1, wherein the web page includes displayed content in addition to the video display and the virtual control panel.

9. The method of claim 1, where the web page includes two video displays.

10. The method of claim 1, where the web page includes a picture within a picture video display.

11. The method of claim 1, where the web page defaults to a smaller size of video display and displays content around the edge of the video display.

12. The method of claim 1, where the web page defaults to a smaller size of video display and displays content around the edge of the video display and does not let the user change the size of the display.

13. The method of claim 1, further comprising:
communicating, by the applet, with a video chip that controls receipt of a video signal.

14. The method of claim 1, wherein a new version of the virtual control panel is implemented by making a change to the applet generating the virtual remote control.

15. An apparatus that controls display of video data, comprising:
software circuitry configured to execute an applet specified within a downloaded web page;
software circuitry configured to receive, by the applet, user input via a virtual control panel displayed by the applet on the web page; and
software circuitry configured to control display of video data on the web page, by the applet, in accordance with the user input.

16. A computer program product, comprising:
a computer usable medium having computer readable code embodied therein for controlling a display of video data, comprising:
computer readable program code devices configured to execute an applet specified within a downloaded web page;
computer readable program code devices configured to receive, by the applet, user input via a virtual control panel displayed by the applet on the web page; and
computer readable program code devices configured to control display of video data on the web page, by the applet, in accordance with the user input.
